# EUROPEAN PATENT APPLICATION

(11) **EP 4 765 844 A1**
(43) Date of publication of application: **24.06.2026**
(21) Application number: 25219443.6
(22) Date of filing: 28.11.2025
(51) Int. Cl.: H04N 23/71, H04N 23/73, H04N 23/745, H04N 25/531, H04N 25/773

(54) **IMAGING APPARATUS, METHOD FOR CONTROLLING IMAGING APPARATUS, AND COMPUTER PROGRAM**

(30) Priority: 20.12.2024 JP 2024224726
(71) Applicant: Canon Kabushiki Kaisha, Tokyo, 146-8501 (JP)
(72) Inventor: KUDO, Tomoko, Tokyo, 146-8501 (JP)
(74) Representative: Canon Europe Limited

(57) **Abstract**

An imaging apparatus includes an imaging element including a light receiving unit configured to output a pulse signal in response to incidence of a photon, a counting unit configured to count pulse signals, a control unit configured to control an imaging frame rate and an accumulation time of an image in the imaging element, and a detection unit configured to detect a lighting period of a flashing light source based on a change in brightness of an image captured while changing the accumulation time by the control unit.

## Description

### Technical Field

The present disclosure relates to an imaging apparatus, a method for controlling an imaging apparatus, and a computer program.

### BACKGROUND

A photon-counting imaging element converts an avalanche multiplication phenomenon that occurs with incidence of photons into pulse signals, and counts the pulse signals to generate a pixel signal. The number of photons that can be counted per unit time is determined by what is called dead time that is rate-limited by the device structure of an avalanche photodiode (APD). When a plurality of photons is incident within a period shorter than the dead time, the number of pulses counted becomes one. Therefore, in the case of using a flashing light source, photons are incident intensively within a short period of time, resulting in many missed counts, and an issue that the actual brightness and colors cannot be reproduced in the image arises.

### SUMMARY

The present disclosure in its first aspect provides an imaging apparatus as specified in claim 1. Optional features are specified in claims 2 to 14.

The present disclosure in its second aspect provides a method for controlling an imaging apparatus as specified in claim 15.

The present disclosure in its third aspect provides a computer program as specified in claim 16.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram illustrating a configuration example of an imaging apparatus.
Figs. 2A and 2B are diagrams illustrating examples of a relationship between a flashing cycle of a light source and an imaging frame rate.
Figs. 3A and 3B are diagrams illustrating driving of an imaging element.
Figs. 4A and 4B are timing charts illustrating a method for detecting a lighting period of the light source according to a first embodiment.
Fig. 5 is a diagram illustrating a method for detecting the lighting period of the light source according to the first embodiment.
Figs. 6A and 6B are diagrams illustrating a method for detecting a lighting period of a light source according to a second embodiment.
Fig. 7 is a diagram illustrating the method for detecting the lighting period of the light source according to the second embodiment.
Figs. 8A to 8E are diagrams illustrating examples of changing driving with regard to imaging according to a third embodiment.
Figs. 9A to 9C are diagrams illustrating examples of changing the driving with regard to imaging according to the third embodiment.
Figs. 10A to 10C are diagrams illustrating examples of correcting image brightness in accordance with changes in driving with regard to imaging according to a fourth embodiment.
Figs. 11A to 11D are diagrams illustrating a user interface for causing an imaging apparatus to detect a lighting period of a flashing light source and change driving with regard to imaging.

### DESCRIPTION OF THE EMBODIMENTS

Hereinafter, embodiments of the present disclosure will be described with reference to the drawings. Note that the following embodiments do not limit the disclosure according to the claims. While a plurality of features is described in the embodiments, not all of the plurality of features is necessarily essential to the disclosure, and the plurality of features may be combined as desired. Further, in the accompanying drawings, the same reference numerals are given to identical or similar components, and redundant descriptions thereof will be omitted.

### <First Embodiment>

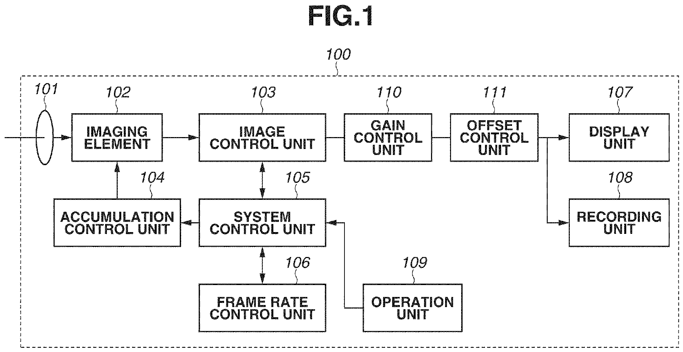

A first embodiment will be described. In the present embodiment, an example will be described in which a lighting period of a flashing light source (for example, a pulsed light source such as a pulse width modulation (PWM) controlled light-emitting diode (LED)) is detected. Fig. 1 is a block diagram illustrating a configuration example of an imaging apparatus 100 according to the present embodiment. For example, the imaging apparatus 100 may include an imaging apparatus such as a digital still camera or digital camcorder. The imaging apparatus is not limited to these imaging apparatuses, and each of the embodiments described below, including the present embodiment, can be applied to an apparatus including a photon-counting imaging element.

The imaging apparatus 100 includes a lens 101, an imaging element 102, an image control unit 103, an accumulation control unit 104, a system control unit 105, a frame rate control unit 106, a display unit 107, a recording unit 108, an operation unit 109, a gain control unit 110, and an offset control unit 111. The imaging apparatus 100 generates a captured image by imaging incident light having transmitted through the lens 101 with the imaging element 102. The imaging element 102 is a photon-counting imaging element and includes an imaging unit that includes a light-receiving unit that outputs pulse signals in response to incident photons and a counting unit that counts the pulse signals. The imaging apparatus 100 also generates a developed image by adjusting colors, brightness, and the like of the generated image by the image control unit 103, and then displays the developed image on the display unit 107 or records the developed image on a recording medium by the recording unit 108.

The system control unit 105 performs overall control of the imaging apparatus 100. The system control unit 105 is an example of a control means and a detection means. The frame rate control unit 106 controls a frame rate for each of imaging, displaying, and recording. The frame rate control unit 106 is an example of the control means. In the present embodiment, the frame rate for each of imaging, displaying, and recording can be set individually. The system control unit 105 performs drive control of the imaging element 102 and the image control unit 103 that are related to the imaging frame rate based on an instruction from the frame rate control unit 106. The system control unit 105 also performs drive control of the display unit 107 that is related to the displaying frame rate, and drive control of the recording unit 108 that is related to the recording frame rate, based on instructions from the frame rate control unit 106.

The accumulation control unit 104 controls an accumulation start timing and an accumulation end timing (readout timing) of the imaging element 102 based on instructions with regard to an accumulation time from the system control unit 105. The accumulation control unit 104 is an example of the control means. The gain control unit 110 can correct an image by applying gain processing to the image to be displayed on the display unit 107 or recorded on the recording unit 108. The offset control unit 111 can correct the image by applying offset processing to the image to be displayed on the display unit 107 or recorded on the recording unit 108.

The display unit 107 displays a captured image, an operation screen, and the like. The recording unit 108 records the captured image and the like on a recording medium. The operation unit 109 includes an operation member such as a switch or a push button, and sends, to the system control unit 105, an instruction corresponding to an operation to be performed on the operation member, such as a state of a power switch of the imaging apparatus 100, an instruction to display an image before image capturing, and various instructions for imaging. The operation unit 109 sends, to the system control unit 105, menu operations and the like for specifying, in advance, display of a captured image and operation of the imaging apparatus 100 including, for example, a shutter speed that changes the image accumulation time. The operation unit 109 issues a notification to the system control unit 105, for example, when receiving an operation instruction to perform flicker detection. Upon receipt of the notification, the system control unit 105 controls the entire imaging apparatus 100 to perform the flicker detection based on the instruction from the operation unit 109.

The operation unit 109 may include a display member such as a liquid crystal display (LCD) or a photodiode, and the display member of the operation unit 109 or the display unit 107 may be used to display the state of the imaging apparatus and the like based on a control signal from the system control unit 105. Further, a touch panel may be attached to the display unit 107 so that on-screen operations can be performed using the touch panel.

Operations of the imaging apparatus 100 for detecting the lighting period of a flashing light source will be described.

To detect the lighting period of the flashing light source, first, the system control unit 105 of the imaging apparatus 100 controls each unit of the imaging apparatus 100 to detect a flashing cycle (flickering cycle) of the light source using flicker detection. The detection of the flashing cycle of the light source through the flicker detection may be performed using any known flicker detection method. For example, the flashing cycle of the light source can be detected using a flicker detection method described in International Publication No. WO2016/132615. Accordingly, the flashing cycle of the light source is detected.

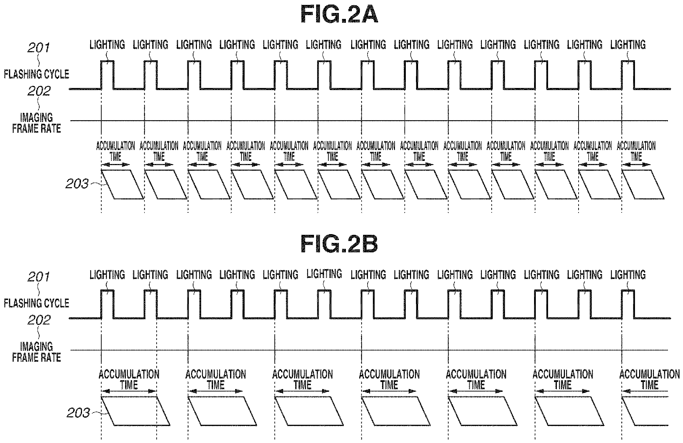

Based on an instruction from the frame rate control unit 106, the system control unit 105 controls the imaging frame rate to match the detected flashing cycle of the light source, as illustrated in Figs. 2A and 2B. Figs. 2A and 2B are timing charts illustrating examples of a relationship between the flashing cycle of the light source and the imaging frame rate. Figs. 2A and 2B illustrate a flashing cycle 201 of the light source and an imaging frame rate 202, and schematically illustrate accumulation times 203 of images output according to the imaging frame rate.

The flashing cycle 201 of the light source represents flickering of a PWM light source such as a PWM controlled LED. In order to facilitate understanding of the description, in Figs. 2A and 2B, the flashing cycle 201 is schematically represented by a rectangular wave in which high-level periods are lighting periods and low-level periods are extinguishing periods. Since the flashing cycle 201 of the light source can be acquired through the flicker detection, the system control unit 105 executes control to match the imaging frame rate 202 to the acquired flashing cycle as in the example illustrated in Fig. 2A. In a case where the flashing cycle 201 of the light source is fast and the imaging frame rate 202 cannot be matched to every flashing cycle, the system control unit 105 executes control to match the imaging frame rate 202 to a multiple of the acquired flashing cycle, as in the example illustrated in Fig. 2B. Fig. 2B illustrates the example in which the imaging frame rate 202 is matched to a cycle twice the acquired flashing cycle. As indicated by the accumulation times 203 of images read out in Figs. 2A and 2B, one image is acquired in one section of the imaging frame rate 202.

Figs. 2A and 2B illustrate cases of using a rolling shutter method as examples, and schematically illustrate with a parallelogram that an accumulation time and a readout time are temporally shifted in image acquisition.

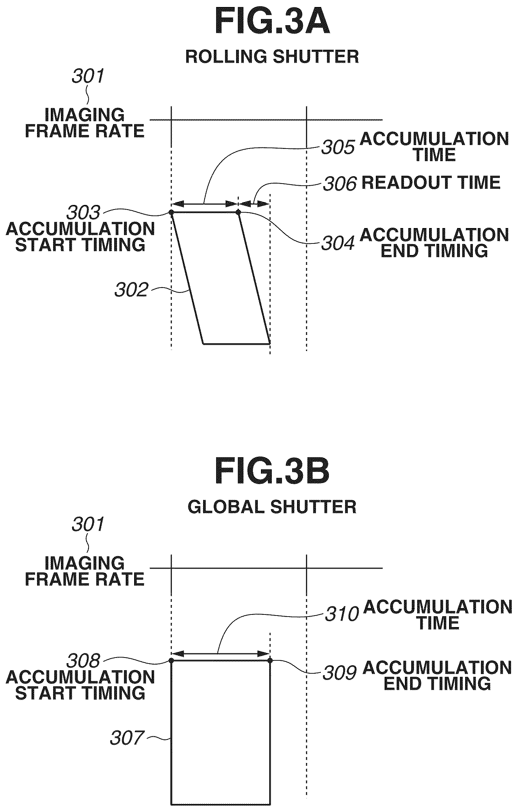

Fig. 3A illustrates a timing chart with regard to imaging in the case of driving by the rolling shutter method. In a parallelogram corresponding to one image 302 acquired according to an imaging frame rate 301, a point 303 in the upper left corner indicates an accumulation start timing of a first row of the image, and a point 304 in the upper right corner indicates an accumulation end timing of the first row of the image. A period between the points 303 and 304 corresponds to an accumulation time 305 for the first row of the image. After a lapse of the accumulation time 305, readout is performed. Similarly, since the accumulation and readout are sequentially performed from the second row to the last row of the image, a readout time 306 for one image is from an accumulation end timing of the first row of the image to the lower right point of the parallelogram corresponding to an accumulation end timing of the last row of the image. Some imaging elements read out a row at a time while some imaging elements read out a plurality of rows at a time. Further, some imaging elements are capable of selecting and reading out a row at a time or a plurality of rows at a time.

Fig. 3B illustrates a timing chart with regard to imaging in the case of driving by a global shutter method. In a rectangle corresponding to one image 307 acquired according to the imaging frame rate 301, a point 308 in the upper left corner indicates the accumulation start timing of the first row of the image, and a point 309 in the upper right corner indicates the accumulation end timing of the first row of the image. A period between the points 308 and 309 corresponds to an accumulation time 310 for the first row of the image. After a lapse of the accumulation time 310, readout is performed. In driving by the global shutter method, all rows of the image are read out at once. Thus, there is no need to shift readout of each row, and the readout time required in driving by the rolling shutter method does not occur.

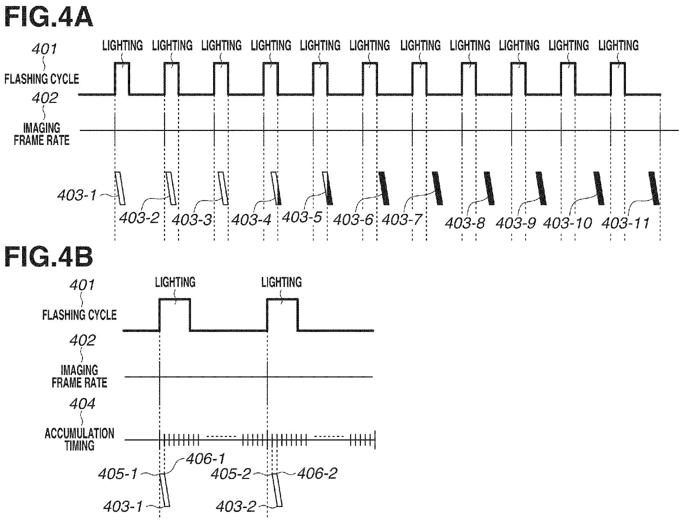

Next, description of operations after detecting the flashing cycle of the light source and executing control to match the imaging frame rate to the flashing cycle of the light source in the above described manner will be provided. The imaging apparatus 100 performs imaging while sequentially changing the accumulation time, and detects the lighting period of the flashing light source based on changes in brightness of captured images. In the first embodiment, the imaging apparatus 100 detects the lighting period of the flashing light source by executing control so as to shift the accumulation start timing or accumulation end timing, i.e., to shift the accumulation time. Hereinafter, with reference to Fig. 4, a method for detecting the lighting period of the flashing light source by the imaging apparatus 100 executing control so as to shift the accumulation start timing or accumulation end timing will be described.

Figs. 4A and 4B are timing charts illustrating a method for detecting the lighting period of the light source according to the first embodiment. In Figs. 4A and 4B, a flashing cycle of the light source is indicated by 401, an imaging frame rate is indicated by 402, and an accumulation time of an image acquired in one section of the imaging frame rate is indicated by 403. An accumulation time 403-i is the accumulation time of an image acquired in the i-th section of the imaging frame rate. Note that i is a suffix and is a natural number such that i = 1, 2, ..., n (n is an arbitrary number, and n = 11 in the example illustrated in Fig. 4A).

Fig. 4B illustrates first and second sections of the imaging frame rate. For the sake of description, an accumulation timing 404 is illustrated with evenly spaced scale marks. However, the number of and spacing between these scale marks, whether they are evenly spaced, and the like depend on the specifications of the imaging element. The accumulation start timing of the first row of the image acquired in the first section of the imaging frame rate is indicated by 405-1, and the accumulation end timing of the first row thereof is indicated by 406-1. In addition, the accumulation start timing of the first row of the image acquired in the second section of the imaging frame rate is indicated by 405-2, and the accumulation end timing of the first row thereof is indicated by 406-2. Comparing the accumulation start timing 405-1 of the first row of the image acquired in the first section with the accumulation start timing 405-2 of the first row of the image acquired in the second section, there is a difference by one scale mark of the accumulation timing 404. Similarly, there is a difference by one scale mark of the accumulation timing 404 between the accumulation end timing 406-1 of the first row of the image acquired in the first section and the accumulation end timing 406-2 of the first row of the image acquired in the second section.

The system control unit 105 executes control such that the length of the accumulation time for each image is constant in this manner, and the accumulation time is shifted for each section of the imaging frame rate as indicated by the accumulation times 403-1 to 403-11 illustrated in Fig. 4A. More specifically, the system control unit 105 sets the accumulation time for each image to be constant, and shifts the accumulation start timing and the accumulation end timing, for example, from the start to the end of the section of the imaging frame rate. Here, the accumulation time for the image can be short from a viewpoint of detection accuracy of the lighting period of the light source. For example, the accumulation time for the image can be set to a minimum settable accumulation time. With regard to the unit by which the accumulation time is shifted, the examples illustrated in Figs. 3A and 3B are merely examples, and various other patterns can be used. Furthermore, the position to which the accumulation time is shifted does not have to be from the start to the end of the section of the imaging frame rate. For example, the accumulation time may be shifted from the start of the section of the imaging frame rate, and when the brightness of the acquired image becomes a predetermined threshold or less, the shifting thereof may not be performed thereafter.

In this way, in the image acquired by driving the imaging element 102, a value of brightness of the entire image changes depending on whether the light source is in a lighting period. The brightness of the image herein may be a sum of count values obtained by photon counting, or a mechanism for acquiring an evaluation value of the brightness of the entire image provided in the imaging apparatus may be used. In a case where an accumulation time spans the lighting periods of the light source such as the accumulation times 403-4 and 403-5 in the fourth and fifth sections of the imaging frame rate illustrated in Fig. 4A, the rows that are not exposed become dark, and thus the brightness of the entire image becomes dark.

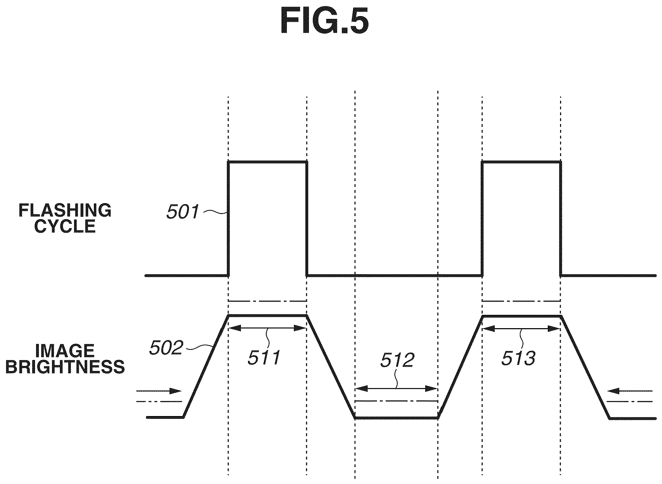

Fig. 5 illustrates an example of changes in image brightness during detection of the lighting period of the light source along with the flashing cycle of the light source. In Fig. 5, a flashing cycle, which is indicated by 501, of the light source is illustrated in accordance with the accumulation timing 404, and changes in image brightness, which is indicated by 502, when the accumulation times of the image are shifted as illustrated in Fig. 4A are illustrated in accordance with the accumulation timing 404. As illustrated in Fig. 5, in the flashing cycle 501 of the light source, the image brightness 502 remains substantially constant during lighting periods indicated by a high level and during extinguishing periods indicated by a low level, whereas the brightness of the image changes during periods in which the light source switches from lighting to extinguishing or from extinguishing to lighting. The flashing cycle 501 of the light source is schematically illustrated as a rectangular wave; however, in practice, the flashing cycle 501 often does not form a clearly defined rectangular wave as illustrated. Further, the image brightness 502 actually is a waveform containing an error due to inclusion of noise and the like, but on average, the waveform is considered to be as illustrated. Furthermore, in a case where sunlight or steady light other than the flashing light source is present, additional brightness due to such light may be added to the image brightness 502, and therefore, it is considered to be as illustrated with a one-dot chain line. For convenience of explanation, Fig. 5 illustrates a case where the lighting period of the light source occurs twice; however, a case where the lighting period of the light source occurs once or three times or more is also possible.

Based on the relationship between the flashing cycle of the light source and changes in the image brightness, among periods 511 to 513 in which the image brightness 502 falls below a certain amount of change (is substantially constant), it is possible to detect that the periods 511 and 513 in which the image brightness is high are the lighting periods of the flashing light source. While the image brightness 502 may not be as illustrated in the drawing due to noise or the like, it is assumed that acquiring brightness values at a plurality of times and averaging the values will result in a trend similar to that for the image brightness 502 illustrated in Fig. 5. In a case where the readout time is delayed due to driving by the rolling shutter method and the entire image does not fit within one section of the imaging frame rate, the lighting periods of the light source can be detected by comparing brightnesses of first rows of acquired images, rather than comparing the acquired images.

According to the present embodiment, it is possible to detect the lighting periods of the flashing light source. In a photon-counting imaging element, in a case where the maximum count value for counting photons is set to a constant value regardless of the lighting period, when the light source is a flashing light source, the ratio between the actual count value corresponding to the number of incident photons and the maximum count value (pixel saturation value) changes. This is because, when the light source is a flashing light source, photons are incident only during the lighting periods, and no photons are incident in a period other than the lighting periods even if a photon counting operation is performed. On the other hand, if the lighting periods of the flashing light source are known, the maximum count value of photons can be determined, and the pixel saturation value can be set accordingly, thereby brightness and color reproducibility can be improved.

### <Second Embodiment>

A second embodiment will be described. In the first embodiment described above, as illustrated in Fig. 4A, the accumulation time is shortened and controlled to be gradually delayed from the start of the imaging frame rate, thereby the lighting periods of the flashing light source are detected. In the second embodiment, detection of lighting periods of a flashing light source is started from a state in which the accumulation time in the first section of the imaging frame rate has the same length as one section of the imaging frame rate, i.e., from what is called a full accumulation state, by controlling such that, from the second section onward, the accumulation time is gradually shortened. In the second embodiment described below, descriptions of components and operations similar to those of the first embodiment described above will be omitted, and only differences from the first embodiment will be described.

Hereinafter, an operation according to the second embodiment after detecting the flashing cycle of the light source and executing control such that the imaging frame rate matches the flashing cycle of the light source will be described. In the second embodiment as well, an imaging apparatus 100 executes control such that the imaging frame rate matches the flashing cycle of the light source, then performs imaging while sequentially changing the accumulation time, and detects lighting periods of the flashing light source based on changes in the brightness of the captured images.

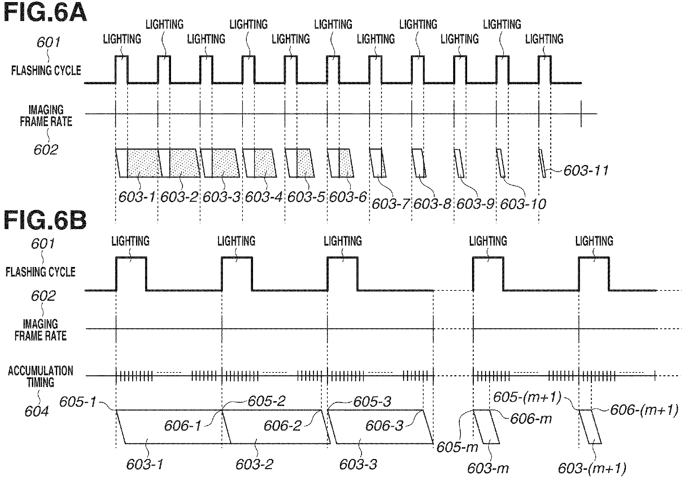

Figs. 6A and 6B are timing charts illustrating a method for detecting the lighting periods of the light source according to the second embodiment. In Figs. 6A and 6B, a flashing cycle, which is indicated by 601, of the light source, an imaging frame rate, which is indicated by 602, and an accumulation time, which is indicated by 603, of an image acquired in one section of the imaging frame rate are illustrated. An accumulation time 603-i is the accumulation time of an image acquired in the i-th section of the imaging frame rate. Note that i is a suffix and is a natural number such that i = 1, 2, ..., n (n is an arbitrary number, and n = 11 in the example illustrated in Fig. 6A).

In the example illustrated in Fig. 6A, the imaging apparatus 100 starts detection from a state in which the accumulation time of an image acquired in one section of the imaging frame rate is the same length as one section of the imaging frame rate, i.e., from what is called a full accumulation state. From the second section of the imaging frame rate onward, the imaging apparatus 100 detects the lighting periods of the flashing light source by controlling such that the accumulation start timing remains fixed at the start timing of the imaging frame rate 602, while the accumulation end timing is gradually shifted forward. More specifically, an accumulation time 603-1 of an image acquired in the first section of the imaging frame rate is controlled to have the same length as one section of the imaging frame rate. In addition, accumulation times 603-2 to 603-11 of images acquired in the second and subsequent sections of the imaging frame rate are controlled such that the accumulation end timing is gradually shifted forward, so that the accumulation time of an image becomes incrementally shorter for each section of the imaging frame rate.

This will be described with reference to Fig. 6B. The accumulation start timing of the first row of an image acquired in the first section of the imaging frame rate is indicated by 605-1, and the accumulation end timing of the first row is indicated by 606-1. The accumulation start timings of the first rows of images acquired in the second and third sections of the imaging frame rate are indicated by 605-2 and 605-3, respectively, and the accumulation end timings of the first rows thereof are indicated by 606-2 and 606-3, respectively. Furthermore, the accumulation start timing of the first rows of images acquired in m-th and (m+1)-th sections of the imaging frame rate are indicated by 605-m and 605-(m+1), respectively, and the accumulation end timings of the first rows thereof are indicated by 606-m and 606-(m+1), respectively.

The accumulation start timings 605-1 to 605-3, ..., 605-m, 605-(m+1), ... are fixed with respect to the imaging frame rate 602. On the other hand, the accumulation end timings 606-1 to 606-3, ..., 606-m, 606-(m+1), ... are shifted from the full accumulation state in the first section of the imaging frame rate by one scale mark of an accumulation timing 604 toward the start of the imaging frame rate 602. By controlling accumulation times of images acquired in this manner, the brightness of the acquired images changes according to the lighting periods of the light source included in the accumulation times 603-1 to 603-11, as illustrated by the accumulation times 603-1 to 603-11 in Fig. 6A.

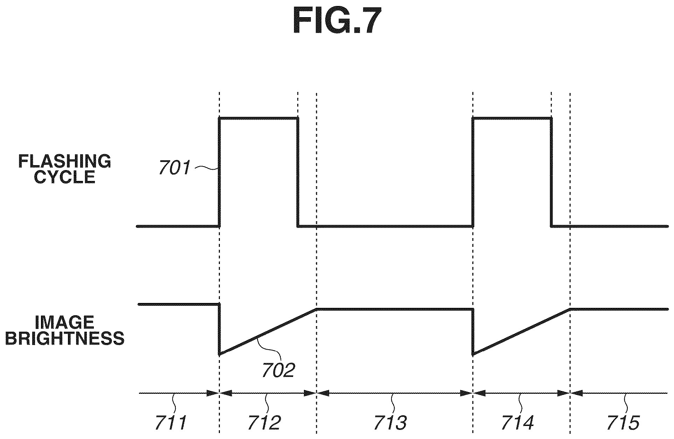

Fig. 7 illustrates an example of changes in image brightness during detection of the lighting periods of the light source along with the flashing cycle of the light source. In Fig. 7, a flashing cycle, which is indicated by 701, of the light source is illustrated in accordance with the accumulation timing 604, and changes in image brightness, which is indicated by 702, when the accumulation times of the image are shortened as illustrated in Fig. 6A are illustrated in accordance with the accumulation timing 604. As illustrated in periods 711, 713, and 715 in Fig. 7, even if the accumulation end timing is shifted during the extinguishing periods indicated by a low level in the flashing cycle 701 of the light source, an exposure period does not change, and thus the image brightness 702 remains substantially constant. For example, during the accumulation times 603-1 to 603-7 in Fig. 6A, the exposure period does not change, and thus image brightness remains substantially constant. On the other hand, as illustrated in periods 712 and 714 in Fig. 7, if the accumulation end timing is shifted during the lighting periods indicated by a high level in the flashing cycle 701 of the light source, the exposure period in the lighting period becomes shorter, and thus the brightness of the image gradually becomes lower as illustrated. For example, in the accumulation times 603-8 to 603-11 illustrated in Fig. 6A, the exposure period becomes shorter, and the image brightness becomes lower. The flashing cycle 701 of the light source is schematically illustrated as a rectangular wave; however, in practice, the flashing cycle 701 often does not form a clearly defined rectangular wave as illustrated. Further, the image brightness 702 actually is a waveform containing an error due to inclusion of noise and the like, but on average, the waveform is considered to be as illustrated. Furthermore, in a case where sunlight or steady light other than the flashing light source is present, additional brightness due to such light may be added to the image brightness 702, and therefore, the image brightness 702 changes according to the accumulation time while the change thereof is smaller than that of the flashing light source.

Based on the relationship between the flashing cycle of the light source and changes in the image brightness, it is possible to detect that the periods 712 and 714 in which the image brightness 702 exceeds a certain amount of change (the amount of change is greater than when the amount of change is substantially constant) are the lighting periods of the flashing light source. While the image brightness 702 may not be as illustrated in the drawing due to noise or the like, it is assumed that acquiring brightness values at a plurality of times and averaging the values will result in a trend similar to that for the image brightness 702 illustrated in Fig. 7.

According to the present embodiment, as in the first embodiment, it is possible to detect the lighting periods of the flashing light source and set the pixel saturation value accordingly, thereby improving brightness and color reproducibility. Furthermore, in the present embodiment, compared with the first embodiment, only the accumulation end timing is shifted, which makes the design easier.

In the above description, the accumulation end timing is shifted. However, it is possible to detect the lighting periods of the flashing light source by sequentially changing either the accumulation start timing or the accumulation end timing of the accumulation time without changing the other. Accordingly, the accumulation start timing may be shifted while keeping the accumulation end timing fixed.

### <Third Embodiment>

A third embodiment will be described. In the third embodiment, an example will be described in which driving with regard to imaging is changed according to the lighting periods of the flashing light source detected in the first or second embodiment described above. In the third embodiment described below, descriptions of components and operations similar to those of the first and second embodiments described above will be omitted, and only differences from the first and second embodiments will be described.

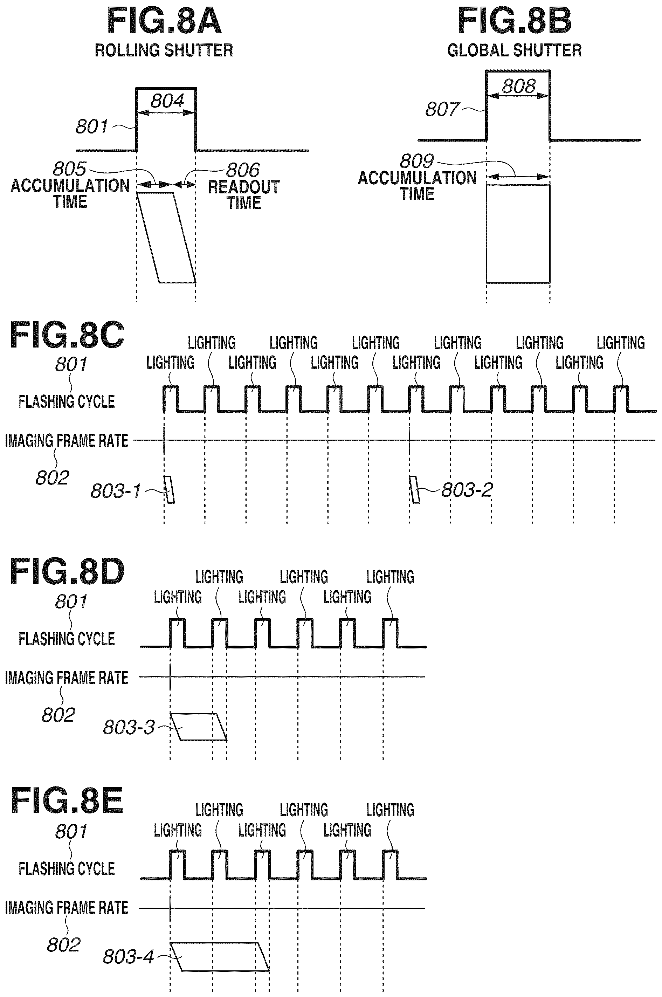

Figs. 8A to 8E are diagrams illustrating examples of changing the driving with regard to imaging according to the lighting periods of a flashing light source. With reference to Fig. 8A, an example of changing the driving according to the lighting period of a light source in driving by the rolling shutter method will be described. In Fig. 8A, the flashing cycle of the light source is indicated by 801, and the lighting period of the light source is indicated by 804. The accumulation time of an imaging element is indicated by 805, and the readout time is indicated by 806. In the case of using the rolling shutter method, readout is performed for each row or a plurality of rows, so there is a time difference between the end of accumulation of the first row of an image and the end of accumulation of the last row of the image. The time difference constitutes the readout time 806. A period of time for completing accumulation and readout of one image is the sum of the accumulation time 805 and the readout time 806.

In a photon-counting imaging apparatus, a counting operation of photons are performed within the accumulation time of an image.

An imaging apparatus 100 sets such that (accumulation time 805 + readout time 806) fits within the lighting period 804 of the light source as illustrated in Fig. 8A, so that the accumulation of the entire image is completed in accordance with the lighting periods of the light source detected as in the first or second embodiment. By setting in this manner, photons are counted during the accumulation time in the imaging element, making it possible to intensively count photons during the lighting period. The period during which photons are counted in the imaging element is limited to the lighting periods of the light source, and the counting operation is not performed during the extinguishing periods in which no photons are incident, so that power consumption can be suppressed. Although it has been described that the (accumulation time 805 + readout time 806) is set so as to fit within the lighting period, the (accumulation time 805 + readout time 806) may coincide with the lighting period, or may be shorter or longer than the lighting period. The settings with regard to the accumulation time 805 and readout time 806 may be made within a range that can be set based on resolution for setting the accumulation time and other specifications of the imaging element or the imaging apparatus.

With reference to Fig. 8B, an example of changing the driving according to the lighting period of the light source in driving by the global shutter method will be described. In Fig. 8B, the flashing cycle of the light source is indicated by 807, and the lighting period of the light source is indicated by 808. The accumulation time of the imaging element is indicated by 809. In the global shutter method, because the entire image is read out all at once, there is no time difference in readout between rows, and thus there is no readout time 806 as illustrated in Fig. 8A. Therefore, by setting such that the accumulation time 809 fits within the lighting period 808 of the light source detected as in the first or second embodiment, it is possible to intensively count photons during the lighting period of the light source.

Fig. 8C is a timing chart illustrating an example of driving, in the case of using the rolling shutter method, by setting such that the (accumulation time 805 + readout time 806) fits within the lighting period 804 of the light source as illustrated in Fig. 8A. In Fig. 8C, accumulation times of images acquired in one section of an imaging frame rate 802 are indicated by 803-1 and 803-2. In this example, the flashing cycle of the flashing light source is fast, and the imaging frame rate 802 cannot be adjusted to one flashing cycle of the light source but is adjusted to a plurality of flashing cycles, namely six cycles. There may be cases in which the imaging frame rate is adjusted to one flashing cycle or to the plurality of flashing cycles other than six cycles of the light source. In the example illustrated in Fig. 8C, the imaging element is driven such that the accumulation time and the readout time for one image are set to fit within one lighting period. In the case of using the global shutter method, the driving may be performed such that the accumulation time with regard to one image fits within one lighting period.

However, because a lighting frequency of a flashing light source such as an LED is high, there is a case where the image accumulation time cannot be set to fit within a single lighting period. In such a case, for example, the imaging element is driven such that the accumulation time and the readout time with regard to one image are set to fit within a period of time, from the start to the end of lighting, that is a multiple of the number of times of lighting, as illustrated in Figs. 8D and 8E. In Figs. 8D and 8E, the accumulation times of images acquired in one section of the imaging frame rate 802 are indicated by 803-3 and 803-4. Fig. 8D illustrates an example of adjusting the accumulation time to two lighting periods (two lighting cycles). The imaging element is driven such that the accumulation time and the readout time with regard to one image are set to fit within a period of time from a start of the first lighting period to an end of the second lighting period. Fig. 8E illustrates an example of adjusting the accumulation time to three lighting periods (three lighting cycles). The imaging element is driven such that the accumulation time and the readout time with regard to one image are set to fit within a period of time from the start of the first lighting period to an end of the third lighting period. Similarly, in the case of using the global shutter method, it is sufficient to drive the imaging element such that the accumulation time is set to fit within the period of time described above. Figs. 8C to 8E illustrate cases where one section of the imaging frame rate includes six lighting periods, but these are merely examples. The number of times of lighting of the light source in one section of the imaging frame rate is not limited to six.

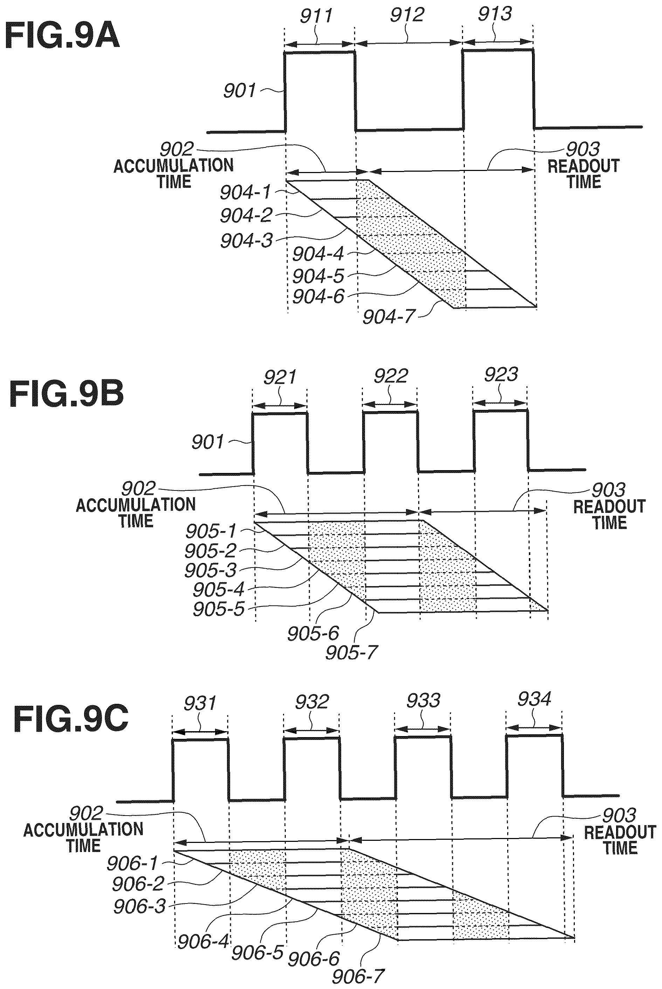

In the case of driving the imaging element in accordance with the multiple of the lighting period as illustrated in Figs. 8D and 8E, the imaging element is driven by the rolling shutter method such that no rows are left unexposed. Such an example will be described with reference to Figs. 9A to 9C. In Figs. 9A to 9C, the flashing cycle of the light source is indicated by 901. The accumulation time of the imaging element is indicated by 902, and the readout time of the imaging element is indicated by 903.

Fig. 9A illustrates an example in which the readout time 903 is slow (long) in driving by the rolling shutter method in a case where the accumulation time 902 and the readout time 903 with regard to one image are set to be included in two lighting periods of the light source. The accumulation times for respective rows of the acquired image are indicated by 904-1 to 904-7. In this example, the accumulation times are schematically represented by seven rows. In practice, the number of rows varies depending on the number of light-receiving elements in the imaging element and a readout method. For the accumulation times 904-1 to 904-7, exposed portions during the lighting periods, which are indicated by a high level, in the flashing cycle 901 of the light source are represented in white, and unexposed portions during the extinguishing periods, which are indicated by a low level, in the flashing cycle 901 of the light source are represented by shading.

In the example illustrated in Fig. 9A, exposure times 904-1 to 904-3 for the first to third rows and exposure times 904-5 to 904-7 for the fifth to seventh rows each include a portion (white) exposed during lighting periods 911 and 913 of the light source. However, there may be a row not exposed at all (black), such as in the case of the exposure time 904-4 for the fourth row that is within an extinguishing period 912 of the light source. If the row is exposed even for a short period of time, correction can be performed according to the exposure time by the image control unit 103, the gain control unit 110, or the like, at a subsequent stage. However, if the row is not exposed at all, it is not possible to obtain image information through correction according to the exposure time, and thus image information will be missing for that row.

To prevent this, in the case of driving the imaging element in accordance with the multiple of the lighting period, as illustrated in Figs. 9B and 9C, the imaging element is driven while being set such that the accumulation time for the first row includes at least two illumination periods. The accumulation time does not need to be equal to two lighting periods, and the accumulation time may be slightly longer or shorter than two lighting periods (for example, 1.8 lighting periods, 1.9 lighting periods, 2.1 lighting periods, 2.2 lighting periods, or the like).

In Fig. 9B, the accumulation times for respective rows of the acquired image are indicated by 905-1 to 905-7, and are schematically represented by seven rows. As indicated by the accumulation times 905-1 to 905-3 for the first to third rows, the first to third rows of the image are exposed, including a first lighting period 921 and a second lighting period 922. As indicated by the accumulation times 905-4 to 905-6 for the fourth to sixth rows, the fourth to sixth rows of the image are exposed because, although the first lighting period 921 has ended at the start of accumulation, the second lighting period 922 is surely included in the accumulation times. As indicated by the accumulation time 905-7 for the seventh row, the seventh row is surely exposed because, although the accumulation time does not include the first lighting period 921, the accumulation time includes the second lighting period 922 and a third lighting period 923.

Fig. 9C illustrates an example in which the readout time 903 of the imaging element is even longer. In Fig. 9C, the accumulation times for respective rows of the acquired image are indicated by 906-1 to 906-7, and are schematically represented by seven rows. As illustrated by the accumulation times 906-1 to 906-7, if the exposure time 906-1 for the first row includes two lighting periods, the accumulation times 906-2 to 906-7 for the second and subsequent rows include at least one lighting period, and thus these rows are exposed. For example, even if the exposure time does not include a first lighting period 931, the exposure time includes subsequent second lighting period 932 and third lighting period 933, or the third lighting period 933 and a fourth lighting period 934, and thus no rows are left unexposed.

Therefore, driving the imaging element as illustrated in Figs. 9B and 9C makes it possible to prevent a row missing image information from occurring. An image obtained in this manner has different exposure amounts among rows, resulting in different brightness among the rows. However, the exposure times for respective rows can be acquired, for example, from the lighting periods detected in the first embodiment and the readout times of the imaging element. By applying a gain to the rows taking the acquired exposure times into account, brightness correction can be performed to generate an image in which variations in brightness among rows are suppressed.

In the present embodiment, the driving of the imaging element is changed by adjusting the accumulation time to match the end of the lighting period of the light source such that accumulation does not occur during the extinguishing period of the light source. Even if the user sets and changes an accumulation period (commonly referred to as a shutter speed) such that the accumulation period ends during the extinguishing period of the light source, it is considered that a phenomenon occurs in which the brightness of the captured image is not changed because the change takes place within the extinguishing period of the light source. To prevent such a phenomenon from occurring, settings for the accumulation period (shutter speed) that the user can make may be limited. In this case, the user is allowed to set only the shutter speed that can be matched to a period of time, from the start to the end of lighting, that is a multiple of the number of times of lighting and within which the accumulation time and the readout time of the imaging element fit.

Furthermore, if there is a uniform light source that emits light uniformly such as the sun or a light fixture of steady light in addition to the flashing light source, the brightness of the image also changes when the accumulation period (shutter speed) set to end during the extinguishing period of the flashing light source changes. In the present embodiment, in a case where there is a uniform light source in addition to the flashing light source, a phenomenon in which the brightness of the image does not change even when the user changes the shutter speed setting may occur. To prevent such a phenomenon, the brightness of the image may be corrected to change in accordance with the preset shutter speed by performing gain processing or offset processing in the gain control unit 110 or the offset control unit 111 in accordance with the brightness of the uniform light source.

According to the present embodiment, by driving the imaging element 102 while setting the image accumulation time to match the detected lighting period of the flashing light source, photon counting is performed only during the lighting period, and no photon counting is performed during the non-lighting period, thereby power consumption can be suppressed.

### <Fourth Embodiment>

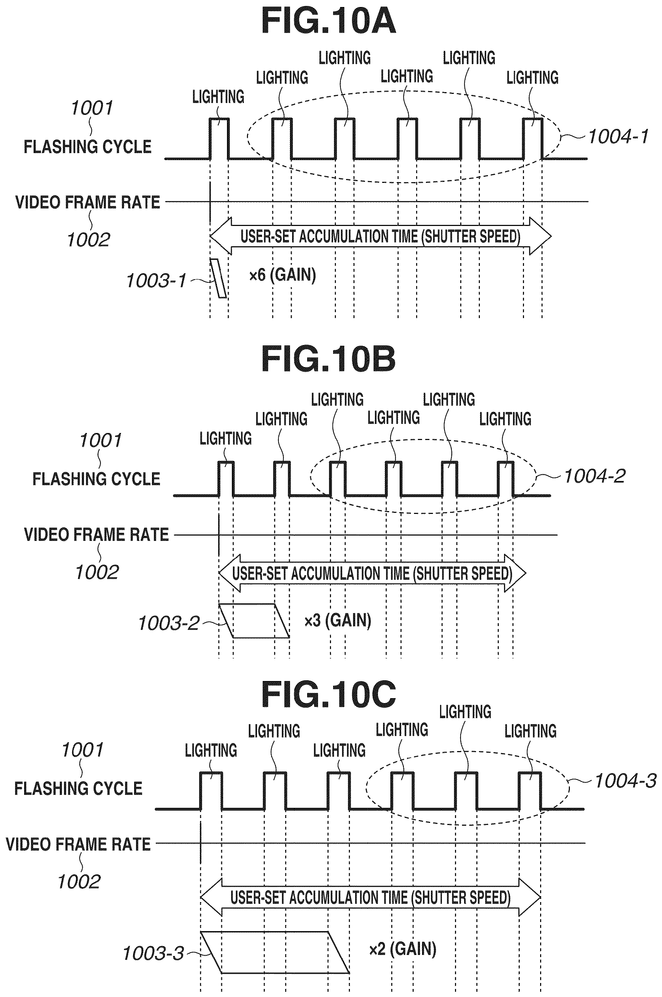

A fourth embodiment will be described. In the fourth embodiment, description of the similar components and operations as those of the first to third embodiments will be omitted. In the fourth embodiment, examples of correcting image brightness by a method by which a user adjusts driving with regard to imaging in accordance with the lighting period of a flashing light source described in the third embodiment will be described with reference to Figs. 10A to 10C. In Figs. 10A to 10C, the flashing cycle of a light source is indicated by 1001, the imaging frame rate is indicated by 1002, and the accumulation time of an image acquired in one section of the imaging frame rate are indicated by 1003-1, 1003-2, or 1003-3. Fig. 10A illustrates an example in which the accumulation time and the readout time for one image are set to be included in one lighting period. Figs. 10B and 10C illustrate examples in which the accumulation time and the readout time for one image are set to fit within a period of time, from the start to the end of lighting, that is a multiple of the number of times of lighting.

In the example illustrated in Fig. 10A, the image acquired during the accumulation time 1003-1 records the exposure amount for one lighting period, and is not exposed during other lighting periods 1004-1. For example, when the accumulation period is set for one section of the imaging frame rate, i.e., when what is called the full accumulation setting is used, the acquired image has the exposure amount for six lighting periods unless the accumulation time is changed to match the lighting period of the light source. Therefore, there is a concern that the read-out image will be darker than the image brightness at the value preset by the user as the accumulation period (shutter speed). To eliminate this, the image may be corrected, for example, as follows. Since the length of the lighting period and the flashing cycle of the light source are known through detection in the first or second embodiment, it is possible to determine how many lighting periods of the flashing light source are included in the preset accumulation period. Once the number of lighting periods included in the accumulation period preset by the user is known, the acquired image can be corrected to an appropriate brightness by performing gain processing corresponding to the number of lighting periods to the acquired image in a gain control unit 110.

As illustrated in Fig. 10A, the imaging element is driven to match one lighting period although the accumulation period preset by the user includes six lighting periods. In this case, since it is desired to correct the number of lighting periods to six that is supposed to be included in the accumulation period preset by the user, in the gain control unit 110 performs gain processing of six times on the acquired image. A similar correction is possible when the imaging element is driven as illustrated in Fig. 10B or 10C. In the case of driving the imaging element as illustrated in Fig. 10B, the image is not exposed during four lighting periods 1004-2. Thus, the gain control unit 110 performs gain processing of three times on the image exposed during the exposure time 1003-2 that includes two lighting periods. In the case of driving the imaging element as illustrated in Fig. 10C, the image is not exposed during three lighting periods 1004-3. Thus, the gain control unit 110 performs gain processing of two times on the image exposed during the exposure time 1003-3 that includes three lighting periods. Accordingly, it is possible to correct to the exposure amount for the six lighting periods that are supposed to be included in the accumulation period (shutter speed) preset by the user.

According to the present embodiment, it is possible to obtain an image with brightness that matches the lighting periods of an actual light fixture even if the lighting periods of the flashing light source is detected as described above in the first to third embodiments and the driving is changed to match the detected lighting periods.

### <Fifth Embodiment>

In the present embodiment, description will be given of a method by which the user causes an imaging apparatus 100 to detect the lighting periods of a flashing light source and change driving with regard to imaging described in the above embodiments.

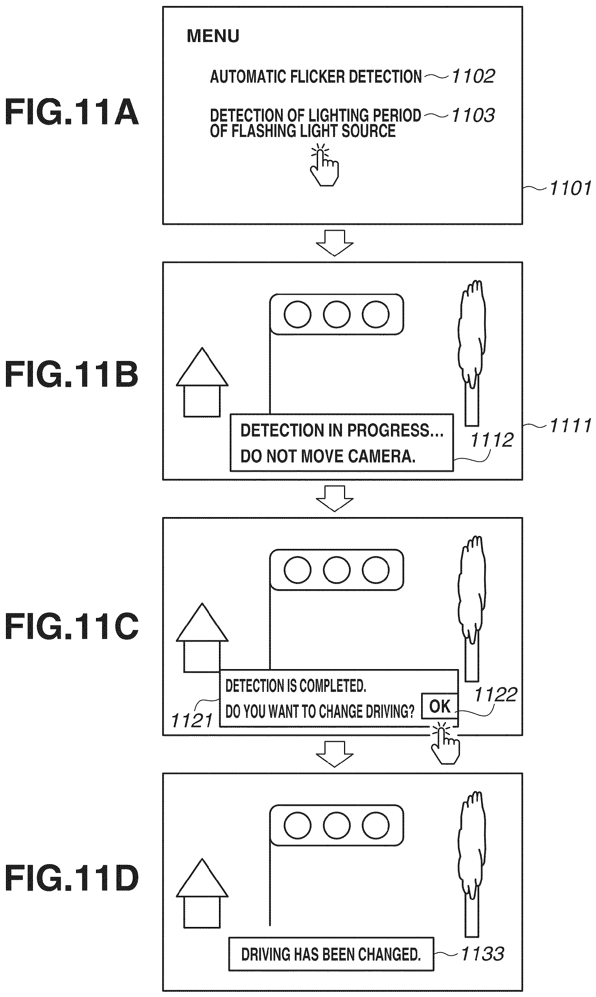

Figs. 11A to 11D are diagrams illustrating a user interface (UI) for causing the imaging apparatus 100 to detect the lighting periods of the flashing light source and change the driving with regard to imaging.

Fig. 11A illustrates an example of a menu image 1101 used by an operation unit 109 to execute detection of the lighting periods of the flashing light source according to the present embodiment. As illustrated in Fig. 11A, the menu image 1101 includes a menu item 1102 for executing automatic flicker detection, a menu item 1103 for executing detection of the lighting periods of the flashing light source, and the like. The menu items 1102 and 1103 in the menu image 1101 illustrated in Fig. 11A are merely examples, and various menu items other than these may be displayed.

When the user selects the lighting period detection menu item 1103, a message 1112 indicating "Detection in progress" and "Do not move the camera" is displayed on a screen as illustrated in an image 1111 in Fig. 11B, and the detection of lighting periods of the light source is started. The message 1112 illustrated in Fig. 11B is an example, and other messages may be displayed. In addition, an image being captured during detection such as the image 1111 may be displayed, or a black screen may be displayed.

Then, when detection of lighting periods of the light source is completed, a message 1121 indicating "Detection is completed" is displayed on the screen as illustrated in Fig. 11C. Further, as illustrated in Fig. 11C, in addition to the detection of lighting periods, in a case where the driving with regard to imaging can be changed in accordance with the lighting periods, a message indicating "Do you want to change the driving?" may be further displayed. In a case where the driving with regard to imaging is not to be changed, the message with regard to the driving change may not be displayed or, in a case where the driving with regard to imaging is to be changed but the message is not desired to be displayed, the message may not be displayed. Furthermore, a button 1122 for the user to accept the change of the driving with regard to imaging may be displayed, allowing the user to select whether to change the driving.

Upon completion of the change of the driving with regard to imaging in response to an instruction to change the driving with regard to imaging from the user, a message 1133 indicating that "Driving has been changed" may be displayed as illustrated in Fig. 11D.

As described above, by providing an operation unit as in the present embodiment, when a user perceives discomfort in an image under a flashing light source, detection of the lighting periods of the flashing light source can be executed, and changes such as adjusting saturation, matching the driving, or the like. This prevents changes in the brightness and colors of the image under the flashing light source.

### (Other Embodiments of Present Disclosure)

The present disclosure can also be implemented by processing in which a program that implements one or more functions of the above-described embodiments is supplied to a system or an apparatus via a network or a storage medium, and one or more processors in a computer of the system or the apparatus read and execute the program. Further, the present disclosure can also be implemented by a circuit (for example, an application-specific integrated circuit (ASIC)) that implements one or more functions.

The above-described embodiments are merely examples of the embodiments of the present disclosure, and the technical scope of the present disclosure should not be construed as being limited thereto. More specifically, the present disclosure can be implemented in various forms without departing from the technical idea or the main features thereof.

According to the present disclosure, it is possible to detect the lighting periods of a flashing light source, thereby suppressing count loss in a photon-counting imaging element and improving the brightness and color reproducibility of an image.

Various embodiments have been described in detail above but it will be understood that the present disclosure is not limited to these embodiments and encompasses all modifications, variants, alternatives and equivalents falling within the scope of the appended claims.

## Claims

1. An imaging apparatus comprising:
an imaging element (102) including light receiving means configured to output a pulse signal in response to incidence of a photon;
counting means configured to count pulse signals;
control means (104, 105, 106) configured to control an imaging frame rate and an accumulation time of an image in the imaging element; and
detection means (105) configured to detect a lighting period of a flashing light source based on a change in brightness of an image captured while changing the accumulation time by the control means.

2. The imaging apparatus according to claim 1, wherein the control means (104, 105, 106) is configured to, in a case where detection of the lighting period of the flashing light source is performed, adjust the imaging frame rate (402) to a flashing cycle of the flashing light source and sequentially change at least one of a start timing and an end timing of the accumulation time.

3. The imaging apparatus according to claim 2, wherein the control means (104, 105, 106) is configured to keep a length of the accumulation time (403-i) constant and sequentially change the start timing (405-i) and the end timing (406-i) of the accumulation time.

4. The imaging apparatus according to claim 3, wherein the detection means (105) is configured to determine, as the lighting period of the flashing light source, a period with a greater brightness among periods in which an amount of change in the brightness (502) of the image captured while changing the accumulation time is less than a predetermined amount of change.

5. The imaging apparatus according to claim 3 or 4, wherein the control means (104, 105, 106) is configured to set the length of the accumulation time (403-i) to a minimum time period that can be set.

6. The imaging apparatus according to any one of claims 3 to 5, wherein the control means (104, 105, 106) is configured to sequentially change the start timing (405-i) and the end timing (406-i) of the accumulation time from a start to an end of one section of the imaging frame rate.

7. The imaging apparatus according to claim 2, wherein the control means (104, 105, 106) is configured to not change one of the start timing (605-i) and the end timing (606-i) of the accumulation time (603-i), and sequentially change the other of the start timing and the end timing of the accumulation time.

8. The imaging apparatus according to claim 7, wherein the detection means is configured to determine, as the lighting period of the flashing light source, a period during which the amount of change in the brightness (702) of the image captured while changing the accumulation time exceeds a predetermined amount of change.

9. The imaging apparatus according to claim 7 or 8, wherein the control means is configured to sequentially change the accumulation time (603-i) so as to become shorter.

10. The imaging apparatus according to any one of claims 7 to 9, wherein the control means is configured to sequentially change the other of the start timing (605-i) and the end timing (606-i) of the accumulation time (603-i) from a start to an end of one section of the imaging frame rate.

11. The imaging apparatus according to any one of claims 1 to 10, wherein the control means is configured to control the accumulation time in accordance with the detected lighting period of the flashing light source.

12. The imaging apparatus according to claim 11, wherein the control means is configured to, in a case where the imaging element is an imaging element of a rolling shutter method, control the accumulation time such that the accumulation time (805) and the readout time (806) with regard to one image is included in the detected lighting period (804) of the flashing light source.

13. The imaging apparatus according to claim 11, wherein the control means is configured to, in a case where the imaging element is an imaging element of a global shutter method, control the accumulation time such that the accumulation time (809) with regard to one image is included in the detected lighting period (808) of the flashing light source.

14. The imaging apparatus according to any one of claims 1 to 13, further comprising gain control means (110) configured to perform gain processing on the captured image in accordance with a number of lighting periods of the flashing light source included in one section of the imaging frame rate.

15. A method for controlling an imaging apparatus including an imaging element (102) including light receiving means for outputting a pulse signal in response to incidence of a photon, and counting means configured to count the pulse signal, the method comprising:
controlling an imaging frame rate and an accumulation time of an image in the imaging element; and
detecting a lighting period of a flashing light source based on a change in brightness of an image captured while changing the accumulation time in the controlling.

16. A computer program comprising computer readable instructions which, when executed by a computer, cause the computer to carry out the method of claim 15.
